# EUROPEAN PATENT APPLICATION

(11) **EP 4 163 853 A1**
(43) Date of publication of application: **12.04.2023**
(21) Application number: 22195829.1
(22) Date of filing: 15.09.2022
(51) Int. Cl.: G06Q 20/12

(54) **SYSTEM, METHOD AND APPARATUS FOR PROVIDING MIXED CART FINANCING OPTIONS**

(30) Priority: 06.10.2021 US 202163252826 P
(71) Applicant: Affirm, Inc., San Francisco, CA 94108 (US)
(72) Inventor: KAUFMAN, Dan, San Francisco,, 94108 (US); KAPOOR, Vishal, San Francisco,, 94108 (US); KARTHIKEYAN, Ajai, San Francisco,, 94108 (US); DITTO, Kelsey, San Francisco,, 94108 (US); KENDRICK, Jesse, San Francisco,, 94108 (US); PHAN, Huyen, San Francisco,, 94108 (US); CUI, Xiaojing, San Francisco,, 94108 (US)
(74) Representative: Piotrowicz, Pawel Jan Andrzej

(57) **Abstract**

A method for employing item-level financing offers in relation to extension of a loan to a user for an online cart including multiple items may include receiving information identifying a first item in the online cart and receiving information identifying a second item in the online cart. The method may further include performing a first credit extension decision with respect to the first item, performing a second credit extension decision with respect to the second item, and providing, based on the first and second credit extension decisions, a financing offer to the user with respect to financing a transaction including both the first and second items. The financing offer includes item-level information regarding details of the first and second credit extension decisions.

## Description

### TECHNICAL FIELD

Example embodiments generally relate to financial industry technologies and, in particular, relate to apparatuses, systems, and methods for enabling n flexible handling of the process of checking a consumer out in relation to a mixed cart of goods or services.

### BACKGROUND

The financial industry is comprised of many thousands of customers, vendors, lenders, borrowers, and other bit players that all interact in various ways to enable customers to ultimately have access to goods and services provided by the vendors. Credit and debit transactions have long been a way that individuals have managed point of sale transactions to ensure relatively seamless transfer of funds from customers, or on their behalf, to vendors for relatively routine or small transactions. Meanwhile, obtaining a loan from a bank has long been the most common way of obtaining financing for non-routine or larger transactions. More recently, buy now, pay later financing has become a popular option.

In many cases, a customer may interact with a vendor or lender to work through a transaction that ultimately provides the vendor with the necessary funds to complete the transaction. The transaction may include a series of items (e.g., goods and/or services) that are offered by a given vendor. The workflow that is used to complete the transaction is almost always dictated precisely according to the payment method that will be employed, or is accepted by the vendor. If some form of financing is to be utilized, a single financing option that is offered or selected is generally applied to every single item that is included in the transaction. For example, if terms for the financing option are such that an interest rate is applicable to the financing option, then that interest rate is applicable to the total balance of the transaction completely independent of the specific items that are included in the transaction. This rigid and inflexible paradigm is typically employed because no alternative has, to date, been offered that is technically supported in such a way as to make such an option feasible.

Thus, there is insufficient flexibility provided at checkout, which is where the consumer may finally have the fullest picture of the costs, and may otherwise better appreciate having an ability to make an informed decision as to precisely how to finance the transaction. Thus, a more flexible system for selection of financing options, at checkout, may be desired.

### BRIEF SUMMARY OF SOME EXAMPLES

Accordingly, some example embodiments may enable the provision of technical means by which to provide a foundation for enabling flexible financing options for checkout, particularly on a mixed cart of items.

In an example embodiment, a method for employing item-level financing offers in relation to extension of a loan to a user for an online cart including multiple items may be provided. The method may include receiving information identifying a first item in the online cart and receiving information identifying a second item in the online cart. The method may further include performing a first credit extension decision with respect to the first item, performing a second credit extension decision with respect to the second item, and providing, based on the first and second credit extension decisions, a financing offer to the user with respect to financing a transaction including both the first and second items. The financing offer includes item-level information regarding details of the first and second credit extension decisions.

In another example embodiment, an apparatus for employing item-level financing offers in relation to extension of a loan to a user for an online cart including multiple items may be provided. The apparatus may include processing circuitry configured for receiving information identifying a first item in the online cart and receiving information identifying a second item in the online cart. The processing circuitry may further be configured for performing a first credit extension decision with respect to the first item, performing a second credit extension decision with respect to the second item, and providing, based on the first and second credit extension decisions, a financing offer to the user with respect to financing a transaction including both the first and second items. The financing offer includes item-level information regarding details of the first and second credit extension decisions.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a functional block diagram of a system for extending item-level credit for financial transactions at checkout according to an example embodiment;
FIG. 2 illustrates a functional block diagram of a credit extension platform according to an example embodiment;
FIG. 3 illustrates a product description page for a product placed in an online cart as an example of a first item for which financing may be sought in accordance with an example embodiment;
FIG. 4 is a product description page for a related item to the first item of FIG. 3 in accordance with an example embodiment;
FIG. 5 illustrates a checkout page for a mixed cart via which financing options for the mixed cart may be obtained in accordance with an example embodiment;
FIG. 6 illustrates a possible financing offer (prior to user account login) for a mixed cart in accordance with an example embodiment;
FIG. 7 illustrates expanded item-level information associated with the financing offer of FIG. 6 in accordance with an example embodiment;
FIG. 8 illustrates a financing offer (after user account login) for the mixed cart in accordance with an example embodiment;
FIG. 9 illustrates expanded item-level information associated with one of the financing options in the financing offer of FIG. 8 in accordance with an example embodiment;
FIG. 10 illustrates a web interface for reviewing a payment plan selected in association with one of the financing options of the financing offer according to an example embodiment;
FIG. 11 illustrates a truth in lending disclosure in accordance with an example embodiment;
FIG. 12 illustrates a financing offer in which the option to exclude individual items from financing is provided in accordance with an example embodiment;
FIG. 13 illustrates the financing offer of FIG. 12, where one of the items is not financed in accordance with an example embodiment;
FIG. 14 illustrates an interface element via which an item that is not to be financed can be separately paid for in accordance with an example embodiment;
FIG. 15 illustrates a block diagram showing item-level credit system interactions in accordance with an example embodiment;
FIG. 16 illustrates a block diagram of a method of employing item-level credit decisions in accordance with an example embodiment; and
FIG. 17 illustrates a block diagram showing control flow associated with adaptive credit decisions at checkout in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other. Additionally, when the term "data" is used, it should be appreciated that the data may in some cases include simply data or a particular type of data generated based on operation of algorithms and computational services, or, in some cases, the data may actually provide computations, results, algorithms and/or the like that are provided as services.

As used in herein, the term "module" is intended to include a computer-related entity, such as but not limited to hardware, firmware, or a combination of hardware and software (i.e., hardware being configured in a particular way by software being executed thereon). For example, a module may be, but is not limited to being, a process running on a processor, a processor (or processors), an object, an executable, a thread of execution, and/or a computer. By way of example, both an application running on a computing device and/or the computing device can be a module. One or more modules can reside within a process and/or thread of execution and a module may be localized on one computer and/or distributed between two or more computers. In addition, these components can execute from various computer readable media having various data structures stored thereon. The modules may communicate by way of local and/or remote processes such as in accordance with a signal having one or more data packets, such as data from one module interacting with another module in a local system, distributed system, and/or across a network such as the Internet with other systems by way of the signal. Each respective module may perform one or more functions that will be described in greater detail herein. However, it should be appreciated that although this example is described in terms of separate modules corresponding to various functions performed, some examples may not necessarily utilize modular architectures for employment of the respective different functions. Thus, for example, code may be shared between different modules, or the processing circuitry itself may be configured to perform all of the functions described as being associated with the modules described herein. Furthermore, in the context of this disclosure, the term "module" should not be understood as a nonce word to identify any generic means for performing functionalities of the respective modules. Instead, the term "module" should be understood to be a modular component that is specifically configured in, or can be operably coupled to, the processing circuitry to modify the behavior and/or capability of the processing circuitry based on the hardware and/or software that is added to or otherwise operably coupled to the processing circuitry to configure the processing circuitry accordingly.

As noted above, the typical workflow for customer checkout, particularly when a financing option is employed, is predetermined and applies to all items involved in a transaction independent of what those items are. In this regard, for example, although a user may be offered or select a specific type of financing option (e.g., a conventional type of loan charging interest, a split pay option where, for example, the user pays in 3 or 4 interest-free payments for their purchases or an installment loan), the terms of the selected type of financing option apply to all of the items in the transaction equally, and are completely independent of what the items that are part of the transaction actually are.

For some vendors, e.g., those with a single type of goods that are all sold under the same brand name or have the same manufacturer or origin (e.g., direct-to-consumer brands with limited stock-keeping units (SKUs) and a relatively high margin), the vendor may dictate sale terms and implement them at checkout to arrive at a final balance for the transaction. If the customer wishes to use external financing (either integrated with the vendor as a partner, or via a credit vehicle such as a credit card or other payment mechanism that may result in extension of credit to the customer to advance funds to the vendor on the customer's behalf), the homogeneity of the type or origin of goods may result in a completely satisfactory experience for the customer to apply fixed terms for the financing option employed to the whole cart or collection of goods involved in the transaction. However, for vendors that offer a variety of different goods or services that may have different suppliers or manufacturers, and distinct types (e.g., marketplace merchants such as Walmart, Target, and many others), the acceptance of the imposition of a single financing offer to the whole transaction has merely been accepted out of necessity since no alternative has generally been available. Meanwhile, example embodiments provide technical means by which to provide such an alternative.

Using such a system, there are a number of situations where credit extension may be provided with terms that are determined on an item-level basis. In other words, item-level financing may be provided. Such item-level financing may provide granular control to customers relative to financing transactions, which may facilitate greater satisfaction with the terms of financing, and may actually drive sales for vendors. Moreover, providing technical means to track and enable item-level financing may further enhance the ability to provide financial incentives and manage product returns with more granular detail. This may enable vendors, banks, and any other parties that may be involved in financial transactions to incentivize vendors (i.e., merchants) and customers to avail themselves of the financial services provided thereby further driving sales and customer satisfaction.

Some example embodiments described herein may therefore provide for a credit extension platform that can be instantiated at an apparatus comprising configurable processing circuitry for the provision of item-level financing, which may be particularly useful in situations where a mixed cart (i.e., a listing of items (e.g., goods or services) the customer intends to purchase are items of different type, origin, manufacturer, brand, etc. The processing circuitry may be configured to execute various processing functions on financial data using the techniques described herein. The credit extension platform may, for example, be configured to provide a way to proceed to checkout in a more flexible (or adaptive) way that gives customers greater flexibility (and visibility) to choose financing options that are specific to the items in the customer's cart at checkout. The increased flexibility provided to customers may translate into more access to credit, more active customers, and better conversion rates for vendors. However, the increased flexibility also necessarily drastically alters the workflow processes since decisions and determinations that are normally not involved in the process must be provided as part of a seamless and robust workflow, which can have significant changes to the interface with the customer, and to the system that presents the interface.

Example embodiments may be employed in underwriting decisions made at or on the way to checkout or time of purchase based on the items in the cart at or on the way to checkout. In relation to underwriting decisions, macroeconomic conditions and seasonality may have an impact on the business of a financial institution or organization. In response to these factors, and various tuning efforts that may normally be employed, an item-level transactional credit model may utilize all inputs and factors to make a credit extension decision (i.e., whether to extend credit to the user to pay for a transaction, and on what terms) for a customer for each of at least two independent items that differ in type, origin or other dimensions that qualify the items as being part of a mixed cart. In this regard, the credit extension platform may employ the credit model to each of the individual items and/or the manufacturer, distributor or brand of the item, to determine what (if any) promotions or incentives may apply to the items. Financing terms may then be offered with respect to each individual item in the cart (where financing is approved). The individualized credit offerings may be combined into an aggregated credit offer that either blends the individualized credit offerings into a single financed transaction or manages each individualized credit offer as its own separate financed transaction. Other factors may also be integrated into credit offers such as the amount of credit requested, the credit score of the user, and numerous other conventional factors that may or may not include specific records of past and recent transactions with a particular company in order to make a credit extension decision.

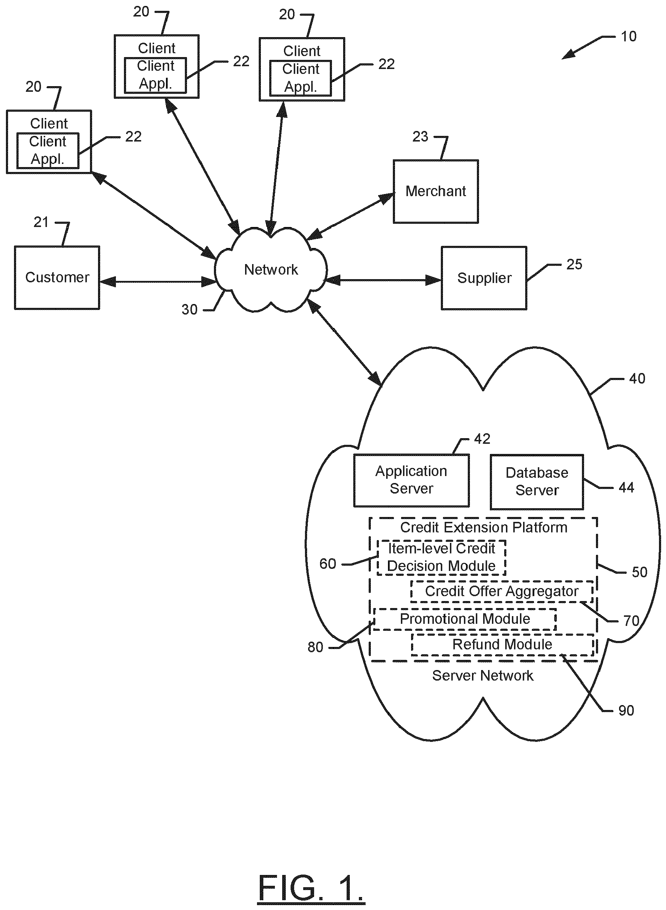

An example embodiment of the invention will now be described in reference to FIG. 1, which illustrates an example system in which an embodiment of the present invention may be employed. As shown in FIG. 1, a credit management system 10 according to an example embodiment may include one or more client devices (e.g., clients 20). Notably, although FIG. 1 illustrates three clients 20, it should be appreciated that a single client or many more clients 20 may be included in some embodiments and thus, the three clients 20 of FIG. 1 are simply used to illustrate a potential for a multiplicity of clients 20 and the number of clients 20 is in no way limiting to other example embodiments. In this regard, example embodiments are scalable to inclusion of any number of clients 20 being tied into the system 10. Furthermore, in some cases, some embodiments may be practiced on a single client without any connection to the system 10.

The clients 20 may, in some cases, each be associated with a single computer or computing device that is capable of executing software programmed to implement example embodiments. Thus, in some embodiments, one or more of the clients 20 may be associated with an organization (e.g., a vendor company) and may be located in different business units, branch offices, or other locations. In other cases, the clients 20 may be associated with individual users (i.e., customers) that may wish to interact with other clients 20 and/or a financial institution or entity. In general, the clients 20 may be terminals or platform entities that are capable of executing example embodiments, and there could be as few as one, or a host of such terminals or entities. In the present example, one of the clients 20 may be specifically associated with a customer 21 and is therefore labeled as such. Meanwhile, another of the clients 20 may be associated with a vendor, supplier or other participant. However, in order to account for the possibility that the vendor may have no prior relationship with the system 10 (or the company or institution that instantiates the system 10), FIG. 1 illustrates more generally a merchant 23, which is a vendor that has its own computer, computing device, server, or other communication platform capable of interacting with the system 10. Supplier 25 is also illustrated as a specific example of one of the clients 20, and the supplier 25 may participate in example embodiments as discussed in greater detail below.

Each one of the clients 20 (including the customer 21, and in some cases also the merchant 23 or the supplier 25) may include one or more instances of a communication device such as, for example, a computing device (e.g., a computer, a server, a network access terminal, a personal digital assistant (PDA), radio equipment, cellular phone, smart phone, or the like) capable of communication with a network 30. As such, for example, each one of the clients 20 may include (or otherwise have access to) memory for storing instructions or applications for the performance of various functions and a corresponding processor for executing stored instructions or applications. Each one of the clients 20 may also include software and/or corresponding hardware for enabling the performance of the respective functions of the clients 20 as described below. In an example embodiment, the clients 20 may include or be capable of executing a client application 22 configured to operate in accordance with an example embodiment of the present invention. In this regard, for example, the client application 22 may include software for enabling a respective one of the clients 20 to communicate with the network 30 for requesting and/or receiving information and/or services via the network 30 as described herein. The information or services receivable at the client applications 22 may include deliverable components (e.g., downloadable software to configure the clients 20, or information for consumption/processing at the clients 20). As such, for example, the client application 22 may include corresponding executable instructions for configuring the client 20 to provide corresponding functionalities for sharing, processing and/or utilizing financial data as described in greater detail below.

In an example embodiment, the client application 22 may be embodied as a software application and corresponding application programming interfaces (APIs) that enable functional interaction between the client 20 and services accessible via the network 30. As such, the client application 22 may be embodied as a software module that is used to access credit offers as described in greater detail below, and to interface with an entity that runs, operates, sponsors or otherwise participates in the system 10.

The network 30 may be a data network, such as one or more instances of a local area network (LAN), a metropolitan area network (MAN), a wide area network (WAN) (e.g., the Internet), and/or the like, which may couple the clients 20 to devices such as processing elements (e.g., personal computers, server computers or the like) and/or databases. Communication between the network 30, the clients 20 and the devices or databases (e.g., servers) to which the clients 20 are coupled may be accomplished by either wireline or wireless communication mechanisms and corresponding communication protocols.

In an example embodiment, devices to which the clients 20 may be coupled via the network 30 may include many different vendors (of which the merchant 23 is one example), suppliers (of which supplier 25 is one example) and one or more application servers (e.g., application server 42), and/or a database server 44, which together may form respective elements of a server network 40. Although the application server 42 and the database server 44 are each referred to as "servers," this does not necessarily imply that they are embodied on separate servers or devices. As such, for example, a single server or device may include both entities and the database server 44 could merely be represented by a database or group of databases physically located on the same server or device as the application server 42. The application server 42 and the database server 44 may include hardware and/or software for configuring the application server 42 and the database server 44, respectively, to perform various functions. As such, for example, the application server 42 may include processing logic and memory enabling the application server 42 to access and/or execute stored computer readable instructions for performing various functions. In an example embodiment, one function that may be provided by the application server 42 may be the provision of access to information and/or services related to credit extension platform 50, and more particularly relating to facilitating financial computations and calculations related to decisions associated with extensions of credit (e.g., loans where, for example, the loans may include a buy now, pay later loan, or other products associated with credit or lending transactions). For example, the application server 42 may be configured to provide (via the credit extension platform 50) execution of instructions, and storage of information descriptive of events or activities, associated with the credit extension platform 50 and the execution of a financial computations, calculations and modeling on behalf of a user of the system 10 located at one of the clients 20, or interacting with a user located at one of the clients 20, in real time. In some cases, the financial transaction may include obtaining buy now, pay later financing, and the activities associated therewith may include the provision of a loan/product application detailing information required by the lender (and operator of the credit extension platform 50) to determine whether credit, funds, or other products can be provided to the customer based on information provided in the loan/product application. However, example embodiments may also apply to other types of loans.

In some embodiments, the credit extension platform 50 may be a technical device, component or module affiliated with the entity operating the system 10, the lender or an agent of the lender. Thus, the credit extension platform 50 may operate under control of the lender or agent of the lender to be a technical means by which to carry out activities under direction of the lender/agent or employees thereof. As such, in some embodiments, the clients 20 may access the credit extension platform 50 services, and more particularly contact the credit extension platform 50 online and utilize the services provided thereby. However, it should be appreciated that in other embodiments, an application (e.g., the client application 22) enabling the clients 20 to interact with the credit extension platform 50 (or components thereof) may be provided from the application server 42 (e.g., via download over the network 30) to one or more of the clients 20 to enable recipient clients 20 to instantiate an instance of the client application 22 for local operation such that the credit extension platform 50 may be a distributor of software enabling individual users to utilize the credit extension platform 50. Alternatively, another distributor of the software may provide the client 20 with the client application 22, and the credit extension platform 50 may communicate with the client 20 (via the client application 22) after such download. In some examples, the client application 22 may be obtained from a web application store (e.g., Google's Chrome Web Store, or other similar web stores at which applications may be obtained).

In an example embodiment, the client application 22 may therefore include application programming interfaces (APIs) and other web interfaces to enable the client 20 to conduct operations as described herein via the credit extension platform 50 and/or via modification to websites and/or web pages associated with the merchant 23. The client application 22 may include source code for modifying the websites and/or web pages, and may also include links to a series of control consoles or web pages including a landing page, onboarding services, activity feed, account settings (e.g., user profile information), transaction management services, payment management services and the like in cooperation with a service application that may be executed at the credit extension platform 50. Thus, for example, the client application 22 may enable the user or operator (e.g., the customer 21) to connect with the credit extension platform 50 to articulate and submit queries, make credit extension requests, initiate and pay for transactions using funds associated with a credit extension request, and/or the like using the credit extension platform 50 in association with an account (e.g., a user account) that is associated with the customer 21.

In an example embodiment, the application server 42 may include or have access to memory (e.g., internal memory or the database server 44) for storing instructions or applications for the performance of various functions and a corresponding processor for executing stored instructions or applications. For example, the memory may store an instance of the credit extension platform 50 configured to operate in accordance with an example embodiment of the present invention. In this regard, for example, the credit extension platform 50 may include software for enabling the application server 42 to communicate with the network 30 and/or the clients 20 for the provision and/or receipt of information associated with performing activities as described herein. Moreover, in some embodiments, the application server 42 may include or otherwise be in communication with an access terminal such as any one of the clients 20 (e.g., a computer including a user interface) via which individual operators or managers of the entity associated with the facilitation agent may interact with, configure or otherwise maintain the credit extension platform 50. Thus, it should be appreciated that the functions of the credit extension platform 50 can be conducted via client-server based interactions involving communications between clients 20 and the server network 40.

As such, the environment of FIG. 1 illustrates an example in which provision of content and information associated with the financial industry may be accomplished by a particular entity (namely the credit extension platform 50 residing at the application server 42 or at one of the clients 20) via interaction with the client application 22. Thus, the credit extension platform 50 may be configured to handle provision of content and information that are secured as appropriate for the individuals or organizations involved and credentials of individuals or organizations attempting to utilize the tools provided herein may be managed by digital rights management services or other authentication and security services or protocols that are outside the scope of this disclosure. However, notably, in some cases, the credit extension platform 50 may operate via a web browser at the client 20 and a specific client application need not be employed at the client 20.

As noted above, the credit extension platform 50 may operate to enable the user associated with a given one of the clients 20 to setup an account (i.e., the user account) with an entity that operates the credit extension platform 50. After account setup, the user may initiate transactions with various vendors (including merchant 23) and fund the transactions via credit extended by the entity that operates the or is associated with the system 10 and the credit extension platform 50. Notably, account setup may occur prior to the user attempting to initiate any particular transaction, or may occur while the user is in the process of conducting a particular transaction. Thus, for example, the user may already have the user account prior to conducting transactions, or the user may setup the user account while conducting a transaction (or on the way to conducting a transaction).

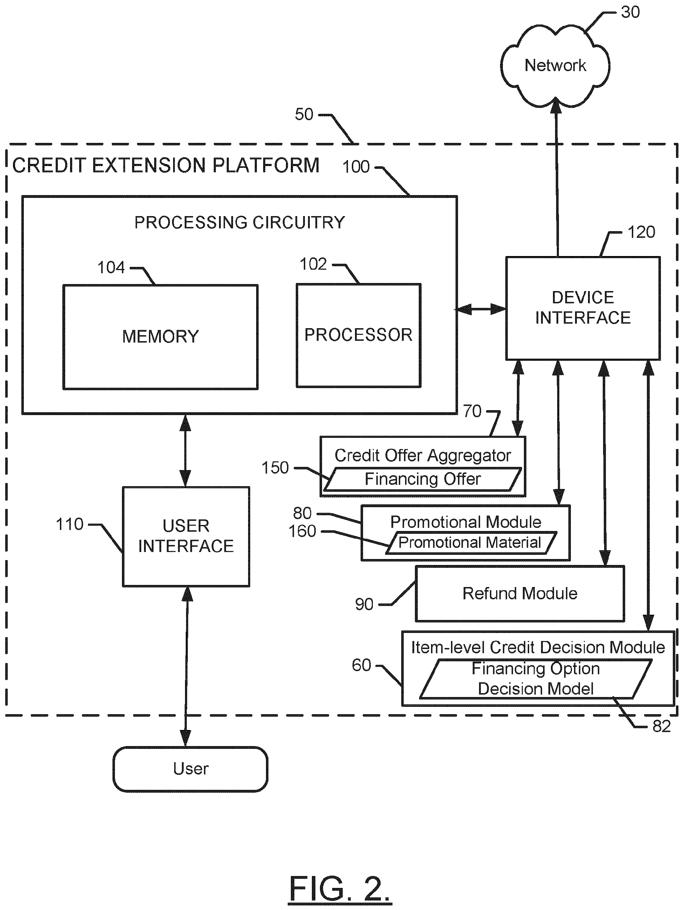

In an example embodiment, the credit extension platform 50 may enable the user to request an extension of credit, or accept an offer of the extension of credit, in connection with a transaction where the financing associated with the extension of credit may be tailored to the individual products that are being financed. The financing offer (or offers) that are generated by the credit extension platform 50 may be presented to the customer 21 to enable the customer 21 to select among presented options that may include, for example, a buy now, pay later loan or other loan or credit mechanism, where the terms associated with each individual item are potentially different and are presented at a granular level (i.e., at an item-by-item level) so that the customer 21 can make the most informed decision. To accomplish this, the credit extension platform 50 of some example embodiments may conduct determinations regarding credit extension so that, for example, one or more offers of credit may be provided to the user at checkout (or on the way to checkout) via the client application 22 or other APIs or web applications. As an example, prior to checkout, the credit extension platform 50 may make a determination as to the creditworthiness of the user and provide information indicating a financing offer (or credit offer) to the user that can be accepted either on the way to checkout or at checkout. The financing offer may be specific to, and generated based on the items present in the cart (e.g., an online shopping cart) of the customer 21 at or on the way to checkout (as described in greater detail in reference to FIG. 2 below). Moreover, in some cases, the merchant 23 and/or the supplier 25 may provide inputs to influence the financing offer or aspects thereof either alone or in combination with input from the entity that operates the credit extension platform 50.

In some example embodiments, a decision model may be provided to guide the ability of the credit extension platform 50 to make a credit extension decision regarding each individual customer (e.g., the customer 21) and/or vendor (e.g., the merchant 23). Example embodiments may also employ machine learning with respect to many different data points associated with the user, the vendor, item supplier, item type, the type of transaction, or many other pieces of relevant information. The use of machine learning may be tailored to providing the user with financing offers that include payment options that are most likely to be useful to the user, and that provide item-level financing options as described herein.

In some cases, for example, the browser of the client 20 or the client application 22 may be used to engage (e.g., via a website and corresponding APIs) with the credit extension platform 50 to select individually available terms associated with a loan product (or products) that the user has an interest in employing for purchasing goods or services in connection with an online transaction. The credit extension platform 50 may then be leveraged to perform the analysis described herein to determine which financing offers to present to the user for use at checkout. The financing offer may be accepted (and in some cases modified or tailored prior to such acceptance) by the customer 21 and the terms and disclosures may be provided corresponding to the accepted financing offer with information at the item-level. At final checkout, the user (i.e., customer 21) may then be enabled to finalize the transaction using a virtual card or other purchasing vehicle provided by the lender.

Thus, for example, the credit extension platform 50 may effectively conduct a preapproval of the customer 21 for a financing offer that is associated with (or determined at least in part based on) the individual items that are in the online shopping cart of the customer 21. In some cases, as noted above, other information from the vendor (i.e., the merchant 23), or other participants in the system 10 (e.g., supplier 25) may also come into play in determining the financing offer. The customer 21 may, prior to checkout and/or at checkout, be made aware of the financing offer and various terms associated therewith at the item-level. Thereafter, by accepting the financing offer, payment may be provided to the vendor 23 by the entity that operates the credit extension platform 50, and a loan may be issued to the customer 21 in accordance with the terms of the financing offer that was accepted. As such, a credit instrument or purchasing vehicle may be used by the customer 21 at checkout to obtain the goods or services being purchased from the vendor 23 with funds being provided (directly or indirectly) to the vendor 23 by the entity associated with the credit extension platform 50, and a loan (e.g., a buy now, pay later loan) is then instantiated between the user and the entity in association with the user account.

Regardless of how the queries, calculations or modeling activities are initiated, the credit extension platform 50 of FIG. 1 may be used to manage execution of such activities. Each of these activities may have its own respective timing and calculations and communications that are facilitated by the credit extension platform 50 and various components of the credit extension platform 50 may be conducted in parallel. The components, which may be functional modules that operate via API or function calls to respective segmented platforms or a monolith or other collection of rules, policies, instructions, or the like.

In an example embodiment, the credit extension platform 50 may include an item-level credit decision module 60 and a credit offer aggregator 70. Although not necessarily required, some embodiments may further include a promotional module 80, and a refund module 90. The item-level credit decision module 60, the credit offer aggregator 70, the promotional module 80 and the refund module 90 may each include or communicate with various sub-modules or components (some of which are shown in greater detail in FIG. 2) that may be used to manage control flows associated with making credit extension decisions based on inputs provided to the credit extension platform 50. In this context, the inputs may include conventional inputs, which may include identity information, credit score, transaction amount, etc. The inputs may also include relationship information specific to the user, the vendor, the supplier, the item (e.g., the good, service or product), the lender and interactions therebetween (e.g., including current and past transactions between the user and the lender). Outputs or information from each of the promotional module 80 and the refund module 90, and in some cases other components or modules, may be fed into the item-level credit decision module 60 to determine item-level options that can be presented to the customer 21, and the credit offer aggregator 70 may aggregate those options to determine the form of the options that is presented to the customer 20. Some of the structures associated with the item-level credit decision module 60, the credit offer aggregator 70, the promotional module 80 and the refund module 90 of an example embodiment will be described in reference to FIG. 2.

FIG. 2 shows certain elements of an apparatus for provision of the credit extension platform 50 or other processing circuitry according to an example embodiment. The apparatus of FIG. 2 may be employed, for example, as the credit extension platform 50 itself operating at, for example, a network device, server, proxy, or the like (e.g., the application server 42 or client 20 of FIG. 1)). Alternatively, embodiments may be employed on a combination of devices (e.g., in distributed fashion on a device (e.g., a computer) or a variety of other devices/computers that are networked together). Accordingly, some embodiments of the present invention may be embodied wholly at a single device (e.g., the application server 42 or the client 20) or by devices in a client/server relationship (e.g., the application server 42 and one or more clients 20). Thus, although FIG. 2 illustrates the credit extension platform 50 as including the components shown, it should be appreciated that some of the components may be distributed and not centrally located in some cases. Furthermore, it should be noted that the devices or elements described below may not be mandatory and thus some may be omitted or replaced with others in certain embodiments.

Referring now to FIG. 2, an apparatus for provision of tools, services and/or the like for facilitating decision making regarding extensions of credit or financing offers at an item-level is shown. In this regard, the credit extension platform 50 may be configured to perform analysis, modeling, or other determinations based on the signaling and/or the information provided to determine whether a financial transaction or loan can be underwritten according to any of the available financing options for a given user (e.g., customer 21) and, if so, what financing or credit offers to extend to the user receiving an affirmative result in such determinations. The apparatus may be an embodiment of the credit extension platform 50 or a device or component thereof including, for example, the item-level credit decision module 60, the credit offer aggregator 70, the promotional module 80 and the refund module 90. As such, configuration of the apparatus as described herein may transform the apparatus into the credit extension platform 50. In an example embodiment, the apparatus may include or otherwise be in communication with processing circuitry 100 that is configured to perform data processing, application execution and other processing and management services according to an example embodiment of the present invention. In one embodiment, the processing circuitry 100 may include a storage device (e.g., memory 104) and a processor 102 that may be in communication with or otherwise control a user interface 110 and a device interface 120. As such, the processing circuitry 100 may be embodied as a circuit chip (e.g., an integrated circuit chip) configured (e.g., with hardware, software or a combination of hardware and software) to perform operations described herein. However, in some embodiments, the processing circuitry 100 may be embodied as a portion of a server, computer, laptop, workstation or even one of various mobile computing devices. In some embodiments, the processor 102 may be embodied as a central processing unit (CPU) or a graphics processing unit (GPU). In situations where the processing circuitry 100 is embodied as a server or at a remotely located computing device, the user interface 110 may be disposed at another device (e.g., at a computer terminal) that may be in communication with the processing circuitry 110 via the device interface 120 and/or a network (e.g., network 30). Thus, in some cases, the connection of the user to the user interface 110 may actually occur via the network 30.

The user interface 110 may be in communication with the processing circuitry 100 to receive an indication of a user input at the user interface 110 and/or to provide an audible, visual, mechanical or other output to the user. As such, the user interface 110 may include, for example, a keyboard, a mouse, a joystick, a display, a touch screen, a microphone, a speaker, augmented/virtual reality device, or other input/output mechanisms. In embodiments where the apparatus is embodied at a server or other network entity, the user interface 110 may be limited or even eliminated in some cases. Alternatively, the user interface 110 may be remotely located. In some cases, the user interface 110 may be located at one of the clients 20 of FIG. 1.

The device interface 120 may include one or more interface mechanisms for enabling communication with other devices and/or networks. In some cases, the device interface 120 may be any means such as a device or circuitry embodied in either hardware, software, or a combination of hardware and software that is configured to receive and/or transmit data from/to a network (e.g., network 30) and/or any other device or module in communication with the processing circuitry 100. In this regard, the device interface 120 may include, for example, an antenna (or multiple antennas) and supporting hardware and/or software for enabling communications with a wireless communication network and/or a communication modem or other hardware/software for supporting communication via cable, digital subscriber line (DSL), universal serial bus (USB), Ethernet or other methods. In situations where the device interface 120 communicates with a network, the network 30 may be any of various examples of wireless or wired communication networks such as, for example, data networks like a Local Area Network (LAN), a Metropolitan Area Network (MAN), and/or a Wide Area Network (WAN), such as the Internet, as described above.

In an example embodiment, the memory 104 may include one or more nontransitory storage or memory devices such as, for example, volatile and/or non-volatile memory that may be either fixed or removable. The memory 104 may be configured to store information, data, applications, instructions or the like for enabling the apparatus to carry out various functions in accordance with example embodiments of the present invention. For example, the memory 104 could be configured to buffer input data for processing by the processor 102. Additionally or alternatively, the memory 104 could be configured to store instructions for execution by the processor 102. As yet another alternative, the memory 104 may include one of a plurality of databases (e.g., database server 44) that may store a variety of files, contents or data sets. Among the contents of the memory 104, applications (e.g., a service application configured to interface with the client application 22) may be stored for execution by the processor 102 in order to carry out the functionality associated with each respective application.

The processor 102 may be embodied in a number of different ways. For example, the processor 102 may be embodied as various processing means such as a microprocessor or other processing element, a coprocessor, a controller or various other computing or processing devices including integrated circuits such as, for example, an ASIC (application specific integrated circuit), an FPGA (field programmable gate array), a hardware accelerator, or the like. In an example embodiment, the processor 102 may be configured to execute instructions stored in the memory 104 or otherwise accessible to the processor 102. As such, whether configured by hardware or software methods, or by a combination thereof, the processor 102 may represent an entity (e.g., physically embodied in circuitry) capable of performing operations according to embodiments of the present invention while configured accordingly. Thus, for example, when the processor 102 is embodied as an ASIC, FPGA or the like, the processor 102 may be specifically configured hardware for conducting the operations described herein. Alternatively, as another example, when the processor 102 is embodied as an executor of software instructions, the instructions may specifically configure the processor 102 to perform the operations described herein.

In an example embodiment, the processor 102 (or the processing circuitry 100) may be embodied as, include or otherwise control the item-level credit decision module 60, the credit offer aggregator 70, the promotional module 80 and the refund module 90, each of which may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the item-level credit decision module 60, the credit offer aggregator 70, the promotional module 80 and the refund module 90, respectively, as described below.

The item-level credit decision module 60 may be configured to include tools to facilitate execution of a credit extension decision based on a financing option decision model 82. The tools may be provided in the form of various modules (or submodules) that may be instantiated by configuration of the processing circuitry 100. The financing option decision model 82 may include tables, algorithms and/or the like that define decision making parameters based on the inputs provided thereto. The inputs may include many different signals that may be used to balance risks associated with extending credit to a user (or a device from which a credit extension request is received that purports to be associated with the user). These signals typically include identity information indicating an identity of the user, and other information enabling a check of a credit score of the user, information descriptive of the transaction itself or items (e.g., a stock-keeping unit (SKU) or other code used to track products at the individual product level), price and other parameters associated with the transaction. However, numerous other signals may also be included that may be used to detect fraud or confirm various aspects of the information noted above or other information that may be useful in making credit extension decisions. The other signals may include information associated with the current and past transactions between the user and the entity that operates the credit extension platform 50 and/or any other relationship or other information that may inform the decision making process for selecting the form and structure of the financing offers. In this regard, for example, information indicative of most likely preferred options for the user (which may be learned by the machine learning component) may be used. The financing option decision model 82 may also include tables, algorithms and/or the like that enable computation (by the item-level credit decision module 80) of a credit limit that is suggested for the user and/or specific financing offers (e.g., including a term or details regarding the number, size and pace of repayments that are to be made) determined at an item-level based on all of the other inputs received. The credit limit given (or suggested) and/or the financing offers made by the credit decision module 80 may therefore be made based on live signaling and the financing option decision model 82.

In an example embodiment, a financing offer may be made, as noted above, at an item-level. Thus, for example, the terms associated with financing each individual item in a cart may be different, and may be presented simultaneously to the customer 21. Moreover, in some cases, the listing of multiple financing offers for corresponding items may include options (or the ability to see more options and review/select among such options) for different terms associated with different financing offers that may be accepted by the customer 21. The presentation of the financing offers may be controlled by the credit offer aggregator 70. In this regard, based on determinations of different possible options for which the customer 21 is approved by the item-level credit decision module 60, the credit offer aggregator 70 may generate a financing offer 150 to present to the customer 21. The financing offer 150 may include an item-level breakdown of individual finance or credit offers for each item and, in some cases, may also include an aggregation of such offers (e.g., as an aggregated finance offer). The aggregation may be accomplished in different ways, based on the programming of the credit offer aggregator 70. In this regard, for example, the credit offer aggregator 70 may blend terms of all individual selected financing offers for respective products into a blended (or averaged) financing offer, which may be accepted to instantiate a single loan to finance all of the items in the cart that were selected for financing in a single loan transaction having the terms of the blended financing offer. However, as an alternative, separate loan transactions may be instantiated for each separate item (or at least items with different terms), and the credit offer aggregator 70 may simply calculate and display a sum (and summary) of the payments that would be made each payment period (e.g., monthly).

In some embodiments, the customer 21 may be enabled to toggle between different aggregation methods (e.g., blending into a single loan, or summing individually item-level distinct loans) to select a preferred option (or options). Thus, as noted above, part of a card may be aggregated via blending, while remaining portions of the cart may be financed individually at the item level so that, for example, items with like financing terms could be aggregated into a single loan, whereas other items having different terms could be financed and tracked separately.

Other aggregation paradigms beyond those described above are also possible. In each case, however, the credit offer aggregator 70 receives multiple item-level financing offers and presents selectable options to the customer 21 regarding such offers so that the customer 21 may select desired options among those presented. When the customer 21 is satisfied with all the terms provided, the customer 21 may proceed to complete the transaction by accepting all loan terms and conditions, and funds may be transferred to the merchant 23 by the lender, and the items in the cart may be obtained by the customer 21.

In an example embodiment, the tables of the financing option decision model 82 may include a merchant listing, which may indicate a list of merchants (or merchant types) for which a corresponding pre-authorized credit limit is approved. The pre-authorized credit limit may correspond to a prior agreement or partnership in the case of certain merchants with which the entity associated with the system 10 (and the credit extension platform 50) has a prior relationship. These merchants, which may be referred to as partner merchants, may be willing to take on the risk of extending credit to drive sales, and may therefore pre-authorize certain customers (or all customers) for a line of credit of a corresponding amount. The merchants (e.g., merchant 23) may also buy down interest rates (e.g., to as far as 0%) or provide other incentives that can be passed to the customer 21 via the credit extension platform 50 at the item level. Thus, for example, the promotional module 80 may be configured to provide aninput mechanism and/or searching mechanism to define a clearing house or marketplace for merchants (and/or suppliers and other parties that interact with the credit extension platform 50) to provide incentives and/or promotional materials at the item-level.

In an example embodiment, the promotional module 80 may receive inputs from merchants (e.g., merchant 23) and suppliers (e.g., supplier 25) indicating specific item-level information (e.g., SKU, UPC code, item name, item category, amount of item, itemized tax and shipping amounts, etc.) for items that are eligible to receive item-level financing offer incentives. In some embodiments, a table or array of information may record the specific item-level information. Thus, for example, SKUs may be provided in a 1:1 mapping of items to corresponding promotions. UPC codes may be correlated by merchant or supplier. Collectively, all such specific item-level information may be stored as promotional material 160 in (or accessible to) the promotional module 80. As such, the promotional module 80 may provide APIs to enable the merchants and/or suppliers (or other parties) to provide the entity operating the credit extension platform 50 with the promotional material 160 and such material may be stored or otherwise made accessible to the item-level credit decision module 60 to facilitate formation of the financing offer 150 in collaboration with the credit offer aggregator 70. The credit offer aggregator 70 may therefore utilize credit decision information from the item-level credit decision module 60 and promotional material 160 (if applicable to items in the cart) to generate the financing offer 150 incorporating any item-level promotions that may impact loan terms for a given individual item.

In some embodiments, the promotional material 160 may include an interest rate reduction, a price reduction, a credit level increase (or subsidy), or other incentive that is purchased by a partner (e.g., the merchant 23 or supplier 25) for a specific item. The specific item may, in some cases, be a member of a class of items that have the same promotional affiliations. In some cases, the promotional material 160 may indicate a related item, and may therefore map items in a cart to other promoted items. The promotional module 80 may inform the credit offer aggregator 70 and/or the item-level credit decision module 60 of the related item and the financing offer 150 may be updated to provide a financing offer for the related item. Thus, the financing offer 150 may not only include information for financing of each item in the cart, but may also include auxiliary financing offers directed to an item that is not yet in the cart, but that is a related item to an item in the cart. This may be done at scale for carts that have multiple items therein such that any related item to an item in the cart may receive its own credit offer. These auxiliary financing offers may be displayed individually (either simultaneously or in a revolving sequence), or may be provided responsive to selection of a link to related item offers. A banner, popup, or other interface element may be used to present auxiliary financing offers for related items in some cases.

In some embodiments, the financing offer 150 may be presented with information indicating an identity of the partner (e.g., merchant or supplier) participating in impacting item-level loan terms. Thus, the partner may receive publicity for their participation. The financing offer 150 may also identify an "as low as" indication of the potential payment amount that can be obtained by acceptance of the corresponding selectable options within the financing offer 150. Other details, if applicable, to any program or budget/timing limitations on the financing offer 150 may also be provided in the financing offer 150.

The credit extension platform 50 may therefore be configured to enable a credit limit to be defined for each customer (or for a set of customers segregated by credit rating) based on the creditworthiness of the customer 21 or other identifying information about the customer 21. That credit limit may itself be augmented, on an item-level basis, if a given item in the cart has been promoted by a merchant or supplier. Thus, not only may cost and interest or other loan terms be impacted by the identity of the item, but the amount for which financing is available (e.g., the credit limit) may also be modified (e.g., increased) for certain items for which the supplier 25 or the merchant 23 are willing to subsidize the increase in the credit limit. In any case, the item-level credit decision module 60 may be configured to determine, based on an identity of each item, and based on the identity of the customer 21, amounts and terms for financing that can be provided for each item in the cart in the manner described herein. The financing offer 150 may then be reviewed and portions thereof may be selected and/or accepted by the customer 21 through an exchange of information with the credit extension platform 50.

Thereafter, for example, when the financing offer 150 has been defined and accepted (e.g., after a review of disclosures and acceptance of terms), the transaction may be processed to purchase the items in the cart of the customer 21. Thereafter the merchant 23 associated with the item(s) may receive funds from a lender associated with the credit extension platform 50 for each item in the cart that was purchased, and the user account of the customer 21 may be modified to indicate the existence of one or more loans for the items for which financing was obtained by the customer 21. Payment may be via credit card, virtual card, or any other means accepted by the merchant 23 or agreed upon between the lender and the merchant 23.

In general terms, operation of the system 10 may be such that the merchant 23 and/or supplier 25 provide an identification of items (e.g., at the SKU level) that they wish to promote and the details of the promotions to be included in the promotional material 160 at the promotional module 80. When the customer 21 is engaged in shopping and adds an item to the cart, the customer 21 may be informed regarding financing options associated with financing the item (e.g., via the financing offer 150). For each additional item added to the cart, the financing offer 150 may be updated to include item specific financing details for the additional item added. Moreover, an aggregated (e.g., blended or individually summed) financing offer may also be provided, as described above. As a simple example, a first product may be $500 and be offered at 10% interest, while a second product may be $300 at 0% interest. A blended financing offer may therefore provide an option to finance the entire $800 cart at 6.25% (i.e., the weighted average of the interest rates involved). However, as noted above, another alternative may be to finance each separately and according to its own respective interest rate. The number of payments and term form making them may be selected by the customer 21 according to his/her desires from among the options presented. In any case, the customer 21 may select from among the options presented, and the cart items may be purchased and financing conducted accordingly. Payments may then be made on the schedule selected by the customer 21.

The refund module 90 may be employed to handle any item returns. In this regard, if the customer 21 wishes to return an item, and the items were financed separately, then the refund module 90 may, quite simply, cancel financing for the corresponding item upon return of the item. Thus, relative to the example above, if the first and second items were separately financed, and the first product is returned, only financing for the second product at 0% interest may remain. However, if a blended interest rate was employed, and the full cart financed with a single loan, then the return of the first product would in this case similarly leave only the second product and its 0% interest rate remaining. If more than simply two products were financed and blended, it may well be that a new blended interest rate is calculated removing the returned item, and counting only those that remain in the calculation of the blended interest rate.

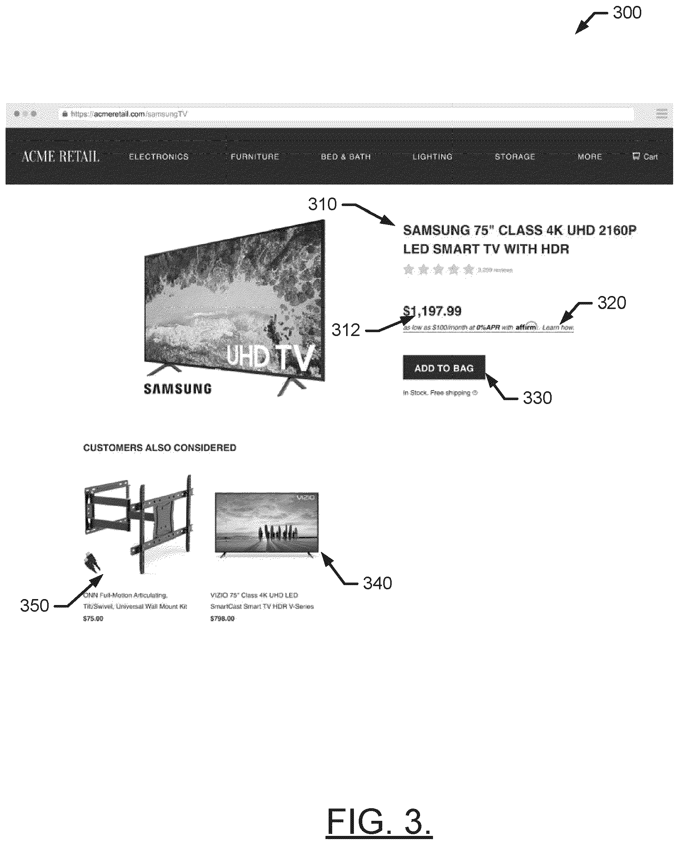

FIGS. 3-14 show a series of control consoles, popups, or other web interfaces that may be generated in accordance with an example embodiment. In this regard, FIG. 3 illustrates a product description page 300 as an example of a web page of a fictitious example online retailer. The product description page 300 includes an image and product details 310 corresponding to the product (e.g., a television). In some embodiments, the credit extension platform 50 may further be configured to examine the price 312 of the product, and calculate a financing advertisement 320 showing, for example, an "as low as" value and interest charge for monthly payments that may be obtained by financing the price 312 of the product using the entity associated with the credit extension platform 50. By selecting the financing advertisement 320, the shopper (e.g., customer 21) may either log in to the user account established previously, or may establish the user account to qualify for financing via the credit extension platform 50.

As shown in FIG. 3, a product selection icon 330 may be provided to enable the shopper to add the product to an online shopping cart or bag. In some examples, the product description page 300 may further indicate related items to the product that is the subject of the product details 310. The related items may include items of the same type 340 or items of a different type 350. Items of the same type 340 may be alternatives to the product that is the subject of the product details 310. Thus, in this example, the items of the same type 340 may include another television of similar price or description. Meanwhile, the items of a different type 350 may include items that are often purchased to support operation of the product that is the subject of the product details 310. For example, a television wall mount may be related to the television since purchasers of the television may statistically very often also purchase the wall mount. Thus, statistical analysis may be used to determine related items.

In some cases, the owner of the product description page 300 may determine and generate corresponding information defining the items of the same type 340 and/or items of a different type 350. However, in some embodiments, the promotional module 80 may determine and generate the items of the same type 340 and/or items of a different type 350 via the methods described above.

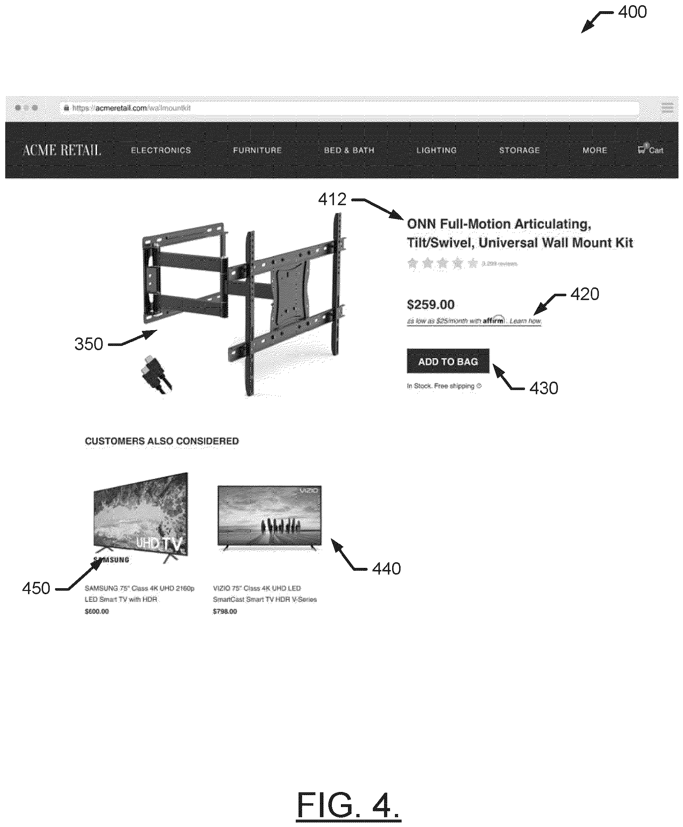

Turning now to FIG. 4, a related product description page 400 is shown in accordance with an example embodiment. In this regard, the product that is the subject of the product details 310 of FIG. 3 has been added to a cart 410, and the item of a different type 350 of FIG. 3 is now highlighted. Product details 412 are presented along with a financing advertisement 420 showing, for example, an "as low as" value and interest charge for monthly payments that may be obtained by financing the item of a different type 350 using the entity associated with the credit extension platform 50. By selecting the financing advertisement 420, the same sequence of events described above in connection with selection of the financing advertisement 320 may be encountered.

As shown in FIG. 4, related items may again be shown corresponding to the item of a different type 350. However, in this case, since the item of a different type 350 is a wall mount, only televisions may be shown as related items. Thus, first related item 440 and second related item 450 are both televisions that may statistically have a high association with the wall mount (i.e., the item of a different type 350).

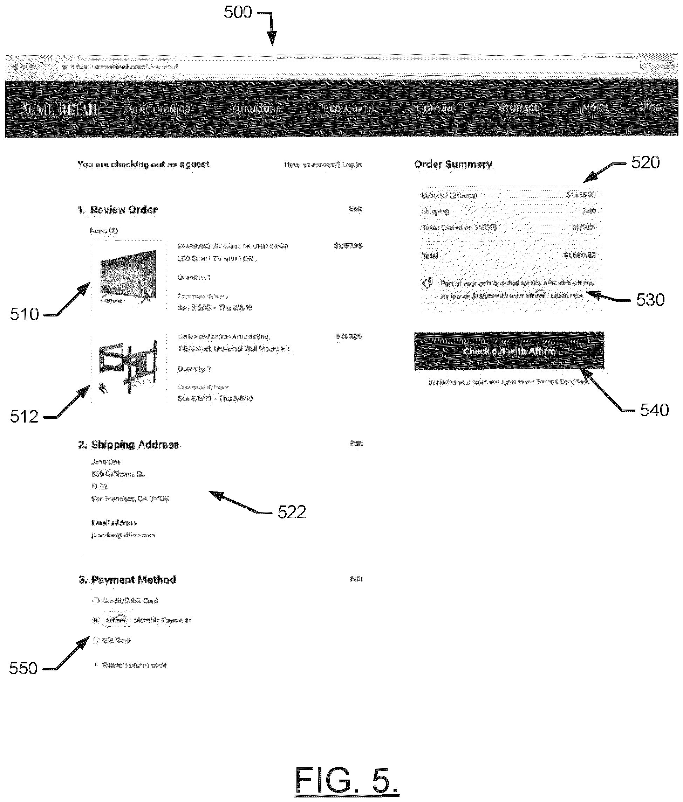

Referring now to FIG. 5, the shopper has proceeded to a checkout page 500 with a first product 510 (e.g., the product that is the subject of the product details 310 of FIG. 3) and a second product 512 (e.g., the item of a different type 350 from FIGS. 3 and 4) in the cart. An order summary 520 may be provided showing cost details including a product cost subtotal, shipping charges (associated with shipping to shipping address 522), taxes, etc., which may be totaled. The order summary 520 may also include a financing advertisement 530, which may apply to the totaled amount of the order summary 520. To select the option to utilize the financing method described in the financing advertisement 530, the shopper may select a checkout interface element 540 that enables the shopper to access or create the user account that will be used to obtain financing for the totaled amount. In some cases, selection of a payment method corresponding to the entity associated with the credit extension platform 50 from among payment options 550 listed may function similarly to selection of the checkout interface element 540 in that financing through the entity associated with the credit extension platform 50 may be achieved.

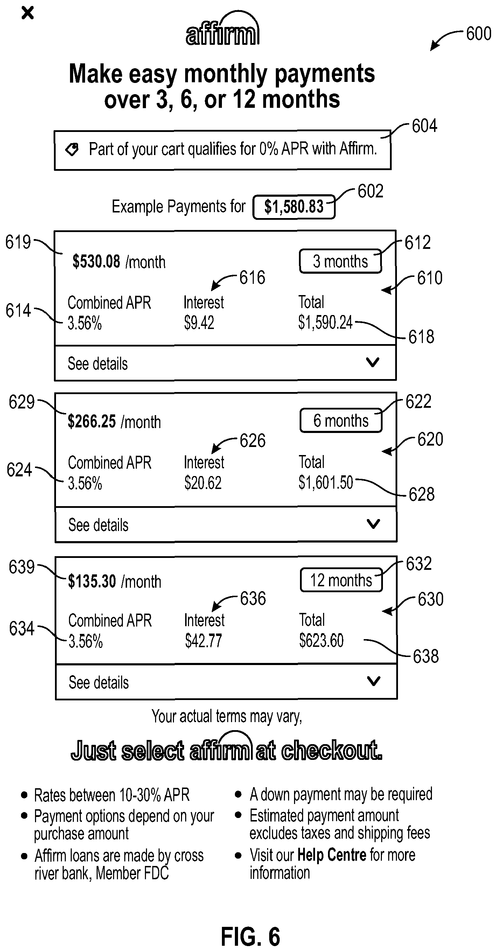

In an example embodiment, selection of the checkout interface element 540 (or potentially also selection of a payment method corresponding to the entity associated with the credit extension platform 50 from among payment options 550) may direct the shopper (e.g., customer 21) to a control console, web interface, popup, or other display that provides a financing offer (e.g., financing offer 150). FIG. 6 illustrates an example of a financing offer 600 of an example embodiment. The financing offer 600 may include multiple selectable options from which the shopper may choose to finance the cart total 602. If applicable, a qualification message 604 may be provided to indicate that some part of the cart total 602 is associated with an item that qualifies for 0% (no interest) financing with the entity associated with the credit extension platform 50.

In this example, a first option 610 indicates a first payment term 612, a blended interest rate 614, a total interest amount 616, and a total amount repaid 618 on a loan that could be obtained via the credit extension platform 50, and a monthly payment amount 619. The first option 610 is calculated for a three-month repayment term on a buy now, pay later loan that blends interest rates for all of the items in the cart, as described above.

The depicted example also includes a second option 620, which indicates a second payment term 622. The second option 620 also includes a blended interest rate 624, a total interest amount 626, and a total amount repaid 628 on a loan that could be obtained via the credit extension platform 50, and a monthly payment amount 629, all of which are calculated for the second payment term 622 and based on the items in the cart. The second option 620 is calculated for a six-month repayment term on a buy now, pay later loan that blends interest rates for all of the items in the cart, as described above.

The depicted example also includes a third option 630, which indicates a third payment term 632. The third option 630 also includes a blended interest rate 634, a total interest amount 636, and a total amount repaid 638 on a loan that could be obtained via the credit extension platform 50, and a monthly payment amount 639, all of which are calculated for the third payment term 632 and based on the items in the cart. The third option 630 is calculated for a twelve-month repayment term on a buy now, pay later loan that blends interest rates for all of the items in the cart, as described above.

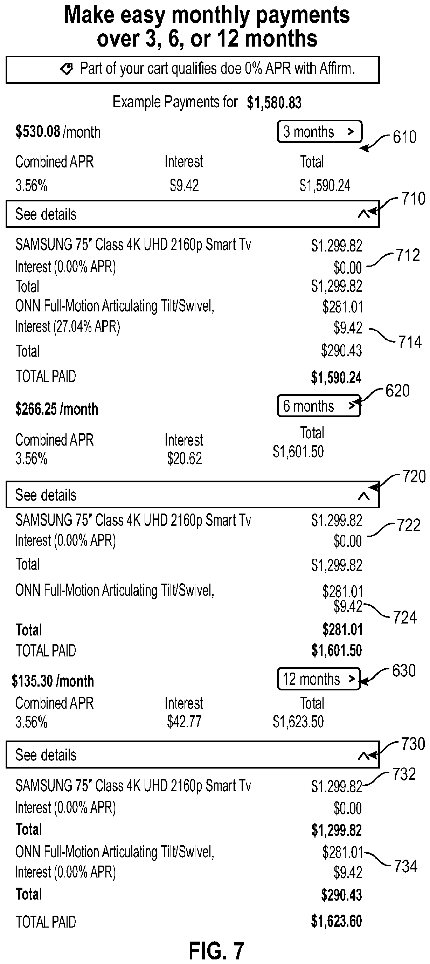

Each of the first, second and third options 610, 620 and 630 may further include a detail requester 640, which can be selected to show fuller detailed information for each respective one of the first, second and third options 610, 620 and 630. FIG. 7 shows a first, second and third detail expansion window 710, 720 and 730 corresponding to each of the first, second and third options 610, 620 and 630, respectively. Each of the first, second and third detail expansion window 710, 720 and 730 includes a corresponding first item summary 712, 722 and 732, and a second item summary 714, 724 and 734. The first item summaries 712, 722 and 732 each indicate an amount financed, and an interest rate applied for the corresponding first item (which is the product that is the subject of the product details 310 from FIG. 3). The second item summaries 714, 724 and 734 each indicate an amount financed, and an interest rate applied for the corresponding second item (which is the item of a different type 350 from FIG. 3). Given that there is no interest charged on the first item in this example, the first item summaries 712, 722 and 732 are identical in this example. However, given that interest is charged for the second item in this example, the second item summaries 714, 724 and 734 all end up being slightly different to account for the interest rate being applied over a longer term.

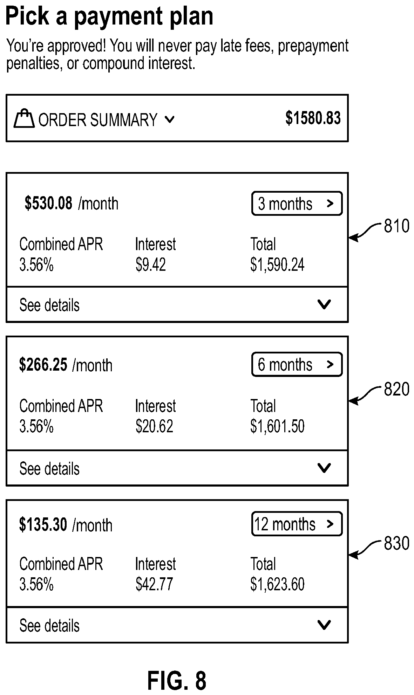

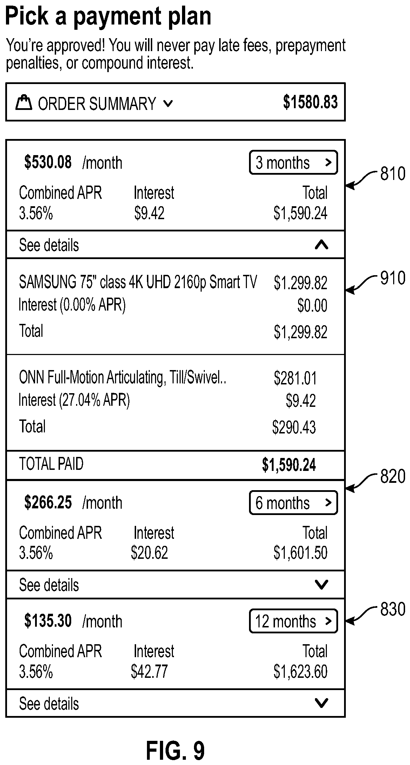

In some cases, the financing offer 600 of FIG. 6 may be provided prior to determining whether the shopper (e.g., customer 21) has been approved for such financing. After the shopper has either logged in with the entity to confirm his/her identity, or has otherwise established the user account, the shopper may be approved for financing by the entity associated with the credit extension platform 50. When approved, financing offer 800 may be presented, which makes each of the first, second and third options 810, 820 and 830 selectable for execution of the loan, and to pay for the items in the cart. As noted above, each of the options may be selected individually. In this regard, FIG. 9 illustrates expansion of only the first option 810 from FIG. 8 by virtue of showing first detail expansion window 910. The first detail expansion window 910 may include information similar to that of the first detail expansion window 710 described above. However, it should be appreciated that all such options may be expanded at the same time, if desired.

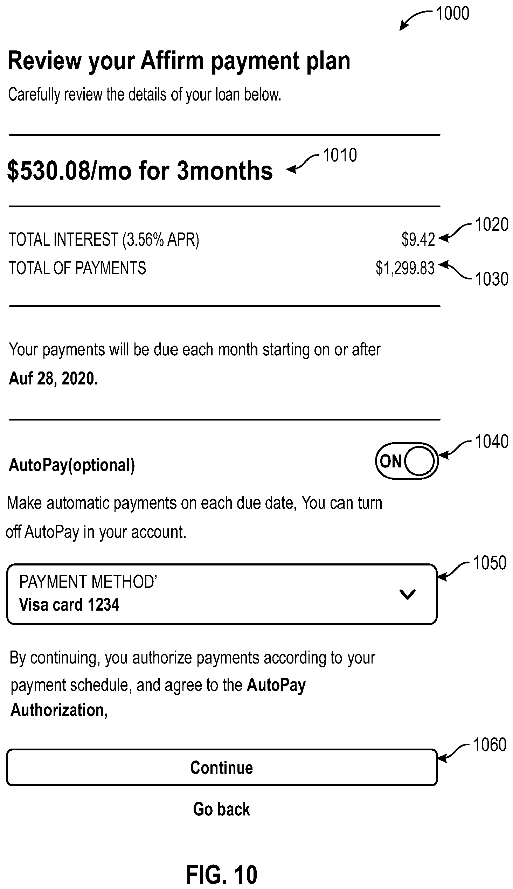

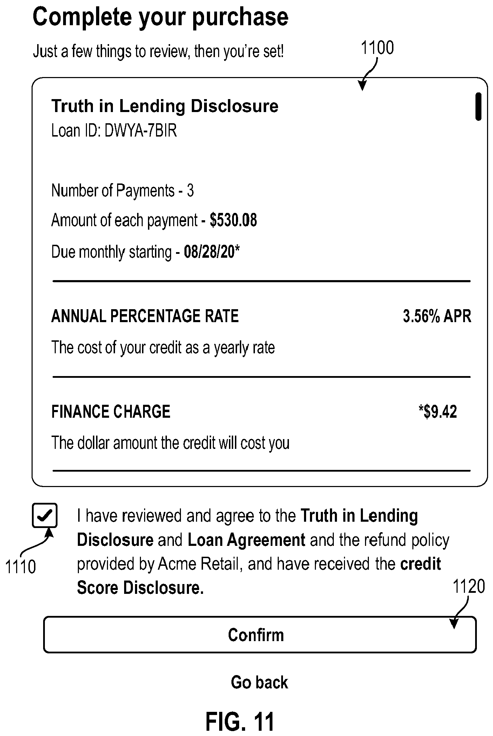

FIG. 10 illustrates a review page 1000 for final review of the options selected before initiation of payment. As shown in FIG. 10, the review page 1000 includes a restatement of the term and monthly payment 1010, an indication of the total interest 1020, and a total amount of the payments 1030. Autopay option selection 1040 and a payment method selector 1050 may also be provided. By selecting the continue button 1060, the shopper may proceed to the truth in lending disclosure 1100 shown in FIG. 11. The truth in lending disclosure 1100 may be reviewed, and the shopper may be required to acknowledge such review via acknowledgment indicator 1110 before the shopper may be enabled to finally confirm the transaction via confirmation button 1120. The loan may be instantiated, and the merchant 23 may receive payment from the lender after the confirmation button 1120 is selected. The items in the cart may then also be shipped to the shopper.

In the examples of FIGS. 3-11, the entire cart has been financed as a single transaction. In the example depicted, it may be assumed that all items in the cart are eligible for financing, either individually or as a combined cart. Thus, the item-level information associated with such financing merely demonstrates the detailed information associated with financing of each of the items, even though the interest rate is blended (based on each item qualifying for different individual interest rates). However, it should be appreciated that other paradigms for information presentation and processing of financing are also possible.

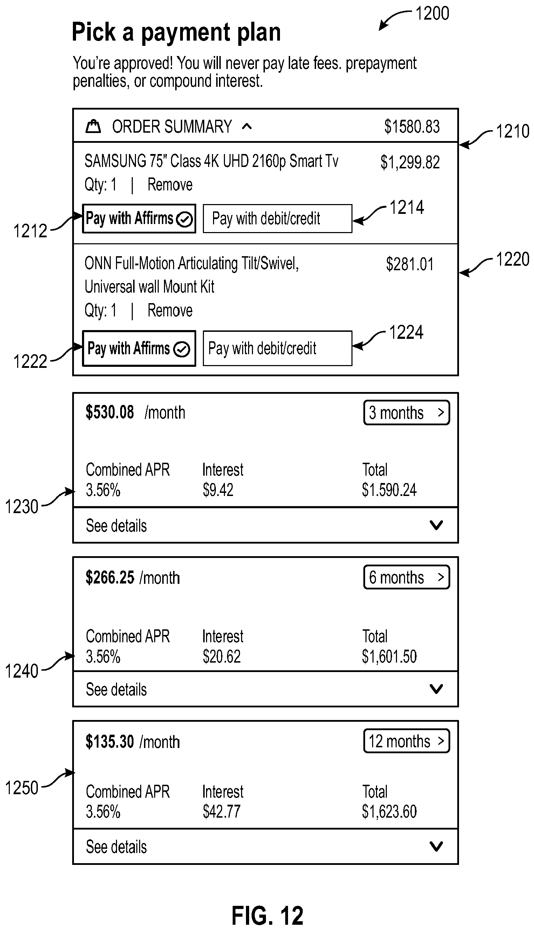

In this regard, for example, FIG. 12 shows an example in which item-level information is provided, but item-level financing is also possible. In FIG. 12, a financing offer 1200 is provided in which each item in the cart (e.g., first item 1210 and second item 1220) can be financed via the credit extension platform 50 (e.g., by selecting a first item, first payment option 1212 and second item, first payment option 1222). However, payment may also be made for each item via another option (e.g., credit or debit payment) that avoids financing using the credit extension platform 50. These options for payment may be considered to be first item, second payment option 1214 and second item, second payment option 1224, respectively. In this example, the first and second item, first payment options 1212 and 1222 each correspond to financing via the entity associated with the credit extension platform 50.

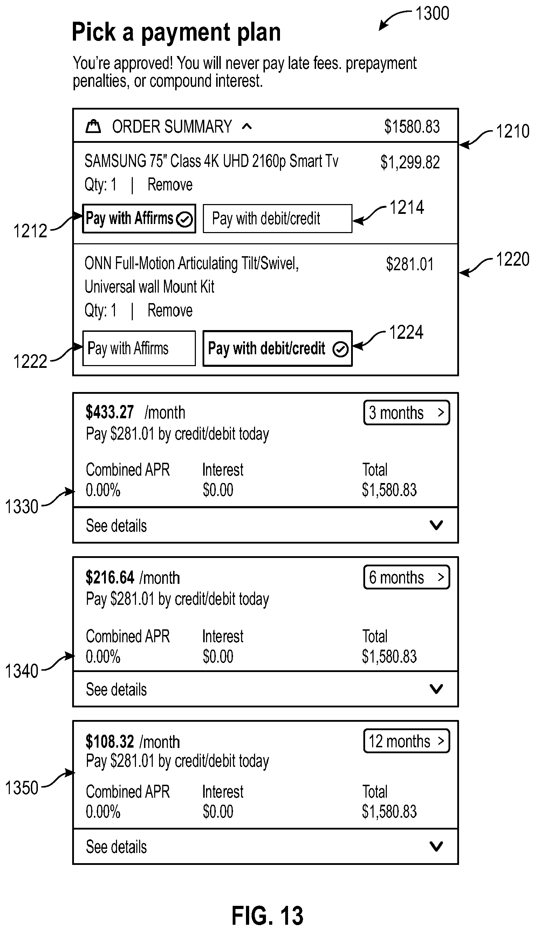

The financing offer 1200 updates in detail based on which of the items in the cart is selected for the first payment option. In this example, since both items are selected for financing via the first and second item, first payment options 1212 and 1222 (as indicated by being highlighted and selected in FIG. 12), the financing details are similar to those shown above in FIGS. 6 and 8. Thus, first, second and third options 1230, 1240 and 1250 correspond to the first, second and third options 610, 620 and 630 of FIG. 6 and the first, second and third options 810, 820 and 830 of FIG. 8. However, to the extent all items are not selected for financing via the credit extension platform 50, different calculations would apply. For example, in FIG. 13, financing offer 1300 is the same as the financing offer 1200 of FIG. 12, except that the shopper has made a selection for the second item, second payment option 1224 instead of the second item, first payment option 1222. This means the second item (which required interest be charged for financing thereof) is no longer blended with the first item for calculation of financing terms. As such, first, second and third options 1330, 1340 and 1350 all have no interest and merely finance the first item 1210, and not the second item 1220. Other interface screens (e.g., shown in the example of FIGS. 3-11 may otherwise be similar to those described above except with amounts changed to reflect the differences in financing and corresponding payment and interest amounts.

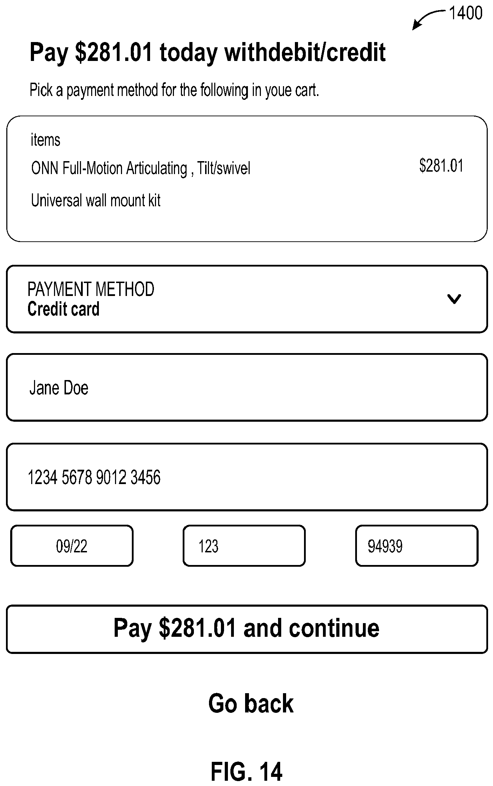

In some cases, certain items may not be eligible for financing using the credit extension platform 50 at all. In a mixed cart where some items cannot be financed, the shopper may be presented with the option to pay for items that cannot be financed with an alternative method. As such, for example, a financing offer may be provided similar to that of FIGS. 12 and 13 except that one of the items may be expressly indicated as ineligible for financing. The corresponding item may then be either removed from the cart, or the shopper may be provided with the option to pay separately for the ineligible item. A credit card payment interface 1400 is shown in FIG. 14, which may be used to pay either for an ineligible item, or for an item otherwise desired to be paid for without financing such item (e.g., such as the second item 1220 of FIG. 13).

In some cases, an item may be ineligible for financing based on the fact that the price of the item exceeds the credit limit for which the customer 21 is approved. In such cases, as noted above, no option to finance the item may be provided. However, in other cases, the credit limit may be made known to the customer 21 and the customer 21 may make a downpayment or otherwise use a credit or debit card to reduce the financed amount to below the credit limit. For example, if an item is $700, but the credit limit (either generally for the customer 21 or for an item of the type involved) is $500, the customer 21 may be informed of the difference, and the customer 21 may pay $200 via credit/debit charge and finance the remaining $500. This reduction in the amount to be financed may be facilitated to enable financing (as is the case in the example above), or may alternatively be done on a purely elective basis by the customer 21. Thus, for example, if the customer 21 is approved to finance a full price on an item, but instead prefers to only finance some portion of the full price, the customer 21 may electively pay for a portion of the full price by other means (e.g., credit/debit).

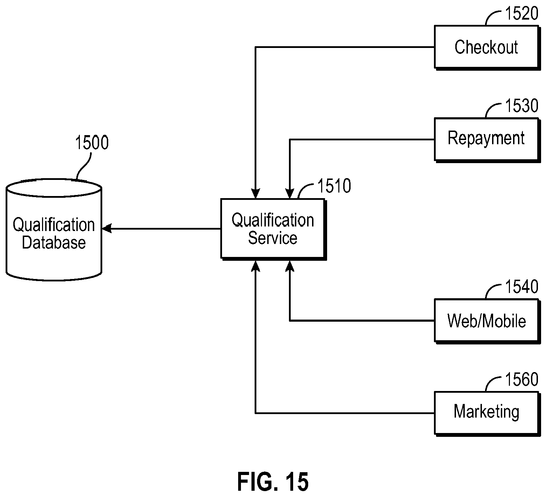

The examples of FIGS. 3-14 are merely descriptive of on example embodiment showing operation of the credit extension platform 50. Example embodiments may also apply in other contexts, and with the use of other specific web interfaces. FIG. 15 is a block diagram of various systems interactions that may be employed to implement a user-level credit capability in accordance with an example embodiment.

As shown in FIG. 15, a qualification database 1500 may store information associated with qualification (e.g., prequalification for existing user accounts, or qualification at checkout by setting up a user account during transaction processing) of a plurality of users, each having a corresponding user account setup and maintained as described above. In an example embodiment, the qualification database 1500 may be a portion of the database server 44 of FIG. 1, or implemented in memory 104 of FIG. 2. The qualification database 1500 may also store information associated with prior transactions for the users, merchants, suppliers, products (e.g., at the SKU level), etc., to enable machine learning to be conducted with respect to such information. A qualification service 1510 may interface with and update the qualification database 1500. The qualification service 1510 may be implemented from the credit extension platform 50 (e.g., including the item-level credit decision module 60).

Checkout information may be provided to the qualification service 1510 by various checkout systems 1520 associated with respective different merchants or websites. Repayment information may also be provided to the qualification service 1510 by various repayment systems 1530 associated with respective different merchants or websites. Web or mobile devices 1540 may be examples of clients 20 (e.g., customers 21, merchants 23 or suppliers 25) that may interact with the qualification service 1510 to setup user accounts and to initiate transactions (via the checkout systems 1520) or make payments (via the repayment systems 1530). The qualification service 1510 may handle all operations associated with setting up and managing user accounts, and issuing financing offers in some cases.

The qualification service 1510 may be employed to make credit extension decisions described above at an item-level, prior to or when the checkout system 1520 is employed. In some cases, the qualification service 1510 may, as noted above, augment (or boost) credit limits based on machine learning and based on inputs from merchants 23 or suppliers 25 wishing to provide such augmentation. In some cases, the machine learning may be performed with respect to marketing information from a marketing system 1560 of which the promotional module 80 may be a component, or be networked with for communication and operational purposes. Thus, for example, targeted promotions may be provided to selected users based on specific items promoted by the merchant 23 or supplier 25. Promotions, rebate offers, sale pricing, reduced financing rates, increased credit limits and other marketing efforts may therefore be incorporated into the checkout processes for individual customers based on a combination of the customers' qualifications, and the items involved (e.g., at the SKU level). Favorited items, or other behaviors exhibited by users that may show high interest in an item (or conversely activities that show low interest) may therefore be implemented on a real-time basis to improve the quality of credit offers to potentially provide incentives for buying to the user. Merchant incentives may also be provided. Machine learning may also (e.g., based on past knowledge of user behavior or tendencies) provide a structure and form for credit offers that are targeted to the user based on items currently in the cart, and related items to such items. For example, if it is known (or can be learned through repeated interactions) that the user favors low interest options, no interest options, short or long terms, or other specific traits of credit offers that the user qualifies to receive, the qualification service 1510 may tailor a smaller list of options to the user where the favored options are prominently (or only) displayed. In other words, personalized terms may be provided to users for the credit offers they receive. In still other cases, if the user is known to favor lower interest or longer terms, financing options offering low interest (or no interest) or long repayment terms may be favored for presentation to the user. Additionally, specific items known to sell well (based on statistical analysis) with items in the cart may be recommended to the user.

As can be appreciated from the description above, the user may be incented to utilize credit or financing offers that are tailored to the user, merchant, supplier, items of interest, and combinations thereof on the way and at checkout. By providing item-level information both for financing options themselves, and for the items included in an online shopping cart, various machine learning techniques may be employed (as described above), or other enhancements can be provided to improve the form and structure of credit offerings (as well as the content thereof) such that the credit offerings may be tailored to the user, to incentivize the user to select credit options that are most beneficial to or desired by the user. The corresponding incentives and immediately perceptible increased flexibility for the user that are offered by item-level financing options may ultimately provide a technical means by which to create a win/win relationship between the lender, merchants, suppliers and the user.

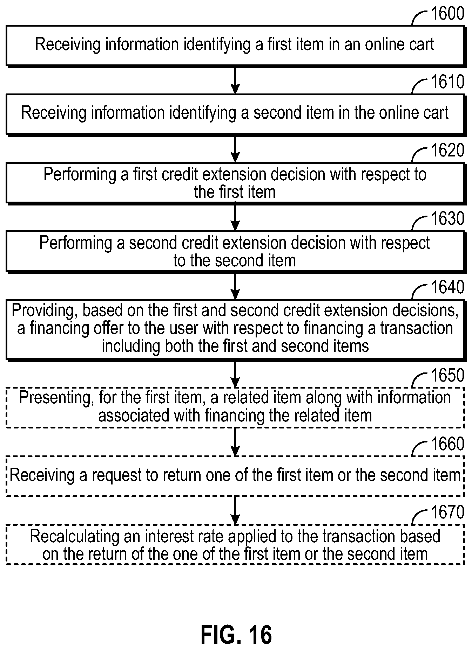

From a technical perspective, the credit extension platform 50 described above may be used to support some or all of the operations described above. As such, the apparatuses described in FIG. 2 may be used to facilitate the implementation of several computer program and/or network communication based interactions. As an example, FIG. 16 is a flowchart of a method and program product according to an example embodiment of the invention. It will be understood that each block of the flowchart, and combinations of blocks in the flowchart, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory device of a user terminal (e.g., client 20, application server 40, and/or the like) and executed by a processor in the user terminal. As will be appreciated, any such computer program instructions may be loaded onto a computer or other programmable apparatus (e.g., hardware) to produce a machine, such that the instructions which execute on the computer or other programmable apparatus create means for implementing the functions specified in the flowchart block(s). These computer program instructions may also be stored in a computer-readable memory that may direct a computer or other programmable apparatus to function in a particular manner, such that the instructions stored in the computer-readable memory produce an article of manufacture which implements the functions specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In this regard, a method of for employing item-level financing offers in relation to extension of a loan to a user for an online cart including multiple items according to one embodiment of the invention is shown in FIG. 16. The method may include receiving information identifying a first item in the online cart at operation 1600 and receiving information identifying a second item in the online cart at operation 1610. The method may further include performing a first credit extension decision with respect to the first item at operation 1620, performing a second credit extension decision with respect to the second item at operation 1630, and providing, based on the first and second credit extension decisions, a financing offer to the user with respect to financing a transaction including both the first and second items at operation 1640. The financing offer includes item-level information regarding details of the first and second credit extension decisions.

In an example embodiment, an apparatus for performing the method of FIG. 16 above may comprise a processor (e.g., the processor 102) or processing circuitry configured to perform some or each of the operations (1600-1640) described above (and operations 1650-1670 described below). The processor may, for example, be configured to perform the operations (1600-1670) by performing hardware implemented logical functions, executing stored instructions, or executing algorithms for performing each of the operations. In some embodiments, the processor or processing circuitry may be further configured for additional operations or optional modifications to operations 1600 to 1670.

In some embodiments, the method (and a corresponding apparatus or system configured to perform the operations of the method) may include (or be configured to perform) additional components/modules, optional operations, and/or the components/operations described above may be modified or augmented. Some examples of modifications, optional operations and augmentations are described below. It should be appreciated that the modifications, optional operations and augmentations may each be added alone, or they may be added cumulatively in any desirable combination. In this regard, for example, the method may further include optional operations (shown in dashed lines in FIG. 16) such as, presenting, for the first item, a related item along with information associated with financing the related item at operation 1650. The method may also or alternatively include optional operations of receiving a request to return one of the first item or the second item at operation 1660 and recalculating an interest rate applied to the transaction based on the return of the one of the first item or the second item at operation 1670. In an example embodiment, the first credit extension decision may be performed with respect to a first financed amount and a first interest rate for financing the first item, and the second credit extension decision may be performed with respect to a second financed amount and a second interest rate for financing the second item. In this context, at least the first and second interest rates may be different from each other. In some cases, providing the financing offer may include providing a blended interest rate for financing the transaction based on the first interest rate and the second interest rate. In an example embodiment, providing the blended interest rate may include determining a weighted average of the first and second interest rates, the weighted average being determined based on the first and second financed amounts. In some cases, providing the financing offer may include providing a first option for financing the transaction over a first payment term and providing a second option for financing the transaction over a second payment term that is longer than the first payment term. In an example embodiment, each of the first and second option may be expandable to include additional item-level information associated with the first payment term and the second payment term, respectively. In some cases, the item-level information regarding details of the first and second credit extension decisions may include a listing of a price of each of the first and second items and a financing message indicating a potential monthly payment associated with buy now, play later financing of each individual one of the first and second items. In an example embodiment, the item-level information regarding details of the first and second credit extension decisions may include first and second financing selectors for each of the first and second items, the first financing selector corresponding to buy now, pay later financing and the second financing selector corresponding to immediate payment by credit or debit card.

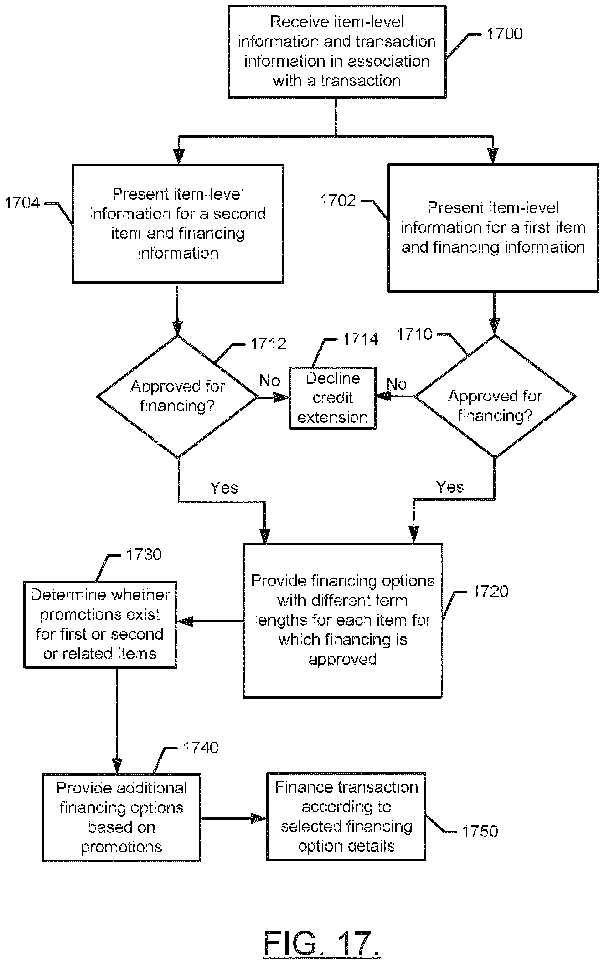

FIG. 17 illustrates a block diagram showing control flow associated with operation of the credit extension platform 50 in accordance with an example embodiment. As shown in FIG. 17, item-level information may be received along with transaction information in association with a transaction at operation 1700. The user information may be information that identifies a user account, or information that can be used for setting up the user account. The transaction information may identify each of the items in the online shopping cart of the user, and the total cost of each, and the sum of all such products. Item-level information including each item (e.g., a first item and a second item) in the cart may then be presented along with financing information associated with a credit offer decision made with respect to each item (e.g., whether to extend credit to the user, and on what terms) at operations 1702 and 1704. The item-level information may be associated with the supplier, vendor or merchant associated with the product or service that is the subject of the transaction, the product or service itself, and/or any other useful information associated with the vendor/merchant or the product/service that may be useful in connection with the operation of the credit extension platform 50 (e.g., machine learnable data that may inform how to tailor options or form and structure of messaging to the user). Thereafter, various underwriting rules and policies may be employed along with the corresponding model information for each respective item to determine whether the user is qualified to receive a credit offer for the corresponding item (e.g., based on item type or identity, user qualifications, or other factors). This may be accomplished by making each of the first and second credit extension decision for the user at operations 1710 and 1714.

In this regard, for example, responsive to operation 1702, a determination may be made as to whether the user is approved for financing for the first item at operation 1710. Similarly, responsive to operation 1704, a determination may be made as to whether the user is approved for the financing at operation 1712.

If the user is not approved for both item's, then the user may be declined any extension of credit at operation 1714. However, if the user is approved for at least one item, then the control flow proceeds to operation 1720. At operation 1720, underwriting policies and rules for item-level credit extension (e.g., via the item-level credit decision module 60) may be applied. The item-level credit decision module 60 may therefore receive information about the approval of either or both of the financing options for the first and second items and provide financing options with different term lengths for each item for which financing is approved at operation 1720. A determination may then be made at operation 1730 regarding promotions for either of the items, and/or for related items. Additional (or updated) financing offers may be made with respect to related items at operation 1740. User selections may then be made to finalize financing for the transaction, and the transaction may be financed at operation 1750 according to the selections made by the user. Thereafter, the financing or credit offer (or offers) may be presented to the user at checkout for completion of the transaction. In this context, the checkout may be a checkout involving either a virtual card issued by the entity or an online payment made by a lender on the users behalf, where the user attempts to purchase an item or service from a vendor via using funds obtained by credit from the entity that operations the credit extension platform 50. A user selection of one of the financing or credit offers may then cause the transaction to be financed according to the selected credit offer. In this regard, the loan may be underwritten and the corresponding repayment schedule associated with the confirmation of the loan may be applicable. A new phase may then be entered, which may include post checkout and the loan repayment period.

The method of FIG. 17 and the hardware described in reference to FIG. 2 are merely examples of methods and hardware that could be employed to implement example embodiments. Moreover, in some cases, various services or systems may cooperate to practice example embodiments, and different combinations of hardware and software may be employed to implement such services and systems. Additionally, the specific operations described above may be modified in some cases, although remaining consistent with the spirit of the inventive concepts described herein.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A method for employing item-level financing offers in relation to extension of a loan to a user for an online cart including multiple items, the method comprising:
receiving information identifying a first item in the online cart;
receiving information identifying a second item in the online cart;
performing a first credit extension decision with respect to the first item;
performing a second credit extension decision with respect to the second item; and
providing, based on the first and second credit extension decisions, a financing offer to the user with respect to financing a transaction including both the first and second items,
wherein the financing offer includes item-level information regarding details of the first and second credit extension decisions.

2. The method of claim 1, wherein the first credit extension decision is performed with respect to a first financed amount and a first interest rate for financing the first item,
wherein the second credit extension decision is performed with respect to a second financed amount and a second interest rate for financing the second item, and
wherein at least the first and second interest rates are different from each other.

3. The method of claim 2, wherein providing the financing offer comprises providing a blended interest rate for financing the transaction based on the first interest rate and the second interest rate.

4. The method of claim 3, wherein providing the blended interest rate comprises determining a weighted average of the first and second interest rates, the weighted average being determined based on the first and second financed amounts.

5. The method of claim 2, wherein providing the financing offer comprises providing a first option for financing the transaction over a first payment term and providing a second option for financing the transaction over a second payment term that is longer than the first payment term.

6. The method of claim 5, wherein each of the first and second option are expandable to include additional item-level information associated with the first payment term and the second payment term, respectively.

7. The method of claim 1, wherein the item-level information regarding details of the first and second credit extension decisions includes a listing of a price of each of the first and second items and a financing message indicating a potential monthly payment associated with buy now, play later financing of each individual one of the first and second items.

8. The method of claim 1, wherein the item-level information regarding details of the first and second credit extension decisions includes first and second financing selectors for each of the first and second items, the first financing selector corresponding to buy now, pay later financing and the second financing selector corresponding to immediate payment by credit or debit card.

9. The method of claim 1, further comprising presenting, for the first item, a related item along with information associated with financing the related item.

10. The method of claim 1, further comprising receiving a request to return one of the first item or the second item and recalculating an interest rate applied to the transaction based on the return of the one of the first item or the second item.

11. An apparatus for employing item-level financing offers in relation to extension of a loan to a user for an online cart including multiple items, the apparatus comprising processing circuitry configured to perform the method of any of claims 1-10.
